# EUROPEAN PATENT SPECIFICATION

(11) **EP 4 564 640 B1**
(45) Date of publication and mention of the grant of the patent: **19.08.2026**
(21) Application number: 23383222.9
(22) Date of filing: 28.11.2023
(51) Int. Cl.: H02J 7/60, H02J 7/65, B60L 3/04

(54) **PRE-CHARGE SYSTEM AND JUNCTION BOX WITH THE PRE-CHARGE SYSTEM FOR ELECTRIC OR HYBRID VEHICLES**
VORLADESYSTEM UND ANSCHLUSSKASTEN MIT DEM VORLADESYSTEM FÜR ELEKTRO- ODER HYBRIDFAHRZEUGE
SYSTÈME DE PRÉCHARGE ET BOÎTE DE JONCTION AVEC LE SYSTÈME DE PRÉCHARGE POUR VÉHICULES ÉLECTRIQUES OU HYBRIDES

(43) Date of publication of application: 04.06.2025
(73) Proprietor: Ficosa Automotive, S.L.U., 08028 Barcelona (ES)
(72) Inventor: Fernández Comesaña, Pablo, Barcelona (ES); Tudela Pi, Marc, Barcelona (ES); Celemín González, Javier, Barcelona (ES)
(74) Representative: Elzaburu S.L.P.

(56) References cited:
- WO-A1-2019/097682
- WO-A1-2022/208517
- DE-A1- 102016 220 273
- KR-A- 20100 104 079
- US-A1- 2014 139 194
- US-A1- 2015 256 014

## Description

### Field of the invention

The invention relates to the field of current Junction Boxes and specifically to the pre-charge circuits to equalize the voltage levels between a battery, for instance, a High Voltage HV Battery, and the peripheral elements.

### Background of the invention

Known current Junction Boxes use an electro-mechanical system called pre-charge circuit to equalize the voltage levels between a battery, for instance a high voltage battery with a voltage between 400 volts and 1100 volts, and the reactant peripherals to avoid potentially destructive transient current surges. To do so, generally the bench of capacitors at the peripheral side needed in the mentioned application, generally named coupling capacitors or DC-Link, are pre-charged by means of a power-line with current control to avoid short-circuits when the capacitors are connected to the battery.

It is known the mentioned pre-charge system being based on a classical electro-mechanical relay and a resistor located in series. The inrush current limitation is done by the pre-charge resistor. These systems have the drawbacks of poor durability, temperature limitations and deterioration inherent in their mechanical nature.

It is also known a pre-charge system being based on an inductor base Active Pre-charge, that comprises a power semiconductor device, for instance, a Solid State Relay, controlled by a control device, an inductor in series with the power semiconductor relay, and a diode between the power semiconductor relay and the inductor and in parallel with the battery.

In this case, all the previously mentioned pre-charge system of the classical electro-mechanical relay and resistor in series is substituted by an Active Pre-charge based on the inductor. The power semiconductor device works in switching mode. The inrush current limitation is done by the inductor and the control of the power semiconductor device switching through frequency and/or duty. To avoid high currents, the inductor shall be high as it needs to integer the current. The solution is based in a Buck-converter.

A buck converter or step-down converter is a DC-to-DC converter which steps down voltage (while stepping up current) from its input (supply) to its output (load).

It is finally known a pre-charge circuit based in a Solid State Relay (SSR) known as Pre-charge and Main Contactor. In this case the classical pre-charge known system is replaced by a power semiconductor device and a control device. In the pre-charge mode, the power semiconductor device control signal shall be a Pulse Width modulation PWM signal. When the pre-charge ends, the power semiconductor device shall work as an on/off relay.

DE 10 2016 220273 A1, WO 2019/097682 A1, US 2014/139194 A1, KR 2010 0104079 A, WO 2022/208517 A1 and US 2015/256014 A1 disclose prior art pre-charge systems.

### Summary of the invention

The present invention relates to a junction box for electric or hybrid vehicles with pre-charge system based on solid-state switches that overcomes the disadvantages of the mentioned state of the art.

It is an object of the invention a pre-charge system for electric or hybrid vehicles comprising:
- a portion of a current line comprising a switch, and connected to a first battery pole,
- a pre-charge current line parallel to the portion of the current line,
- a resistor being electrically located in the pre-charge current line,
- a power semiconductor device electrically connected in series with the resistor through the pre-charge current line and configured to act as a switch of a current flowing through the pre-charge current line,
- a control device in electrical connection with the power semiconductor device and configured to connect and disconnect the power semiconductor device, and
- a power diode electrically connected in series with the power semiconductor device through the pre-charge current line and configured to block a counter current flowing through the pre-charge current line.

The pre-charge system is configured such that when the power semiconductor device is switched to closed, the pre-charge of the capacitor starts.

According to the invention, in the pre-charge current line, the classical current relay solution is substituted by a Solid State Relay (SSR).

The main functionality of the overall system is the same as the previously disclosed in the state of the art. When the power semiconductor device is closed, the pre-charge of the capacitor starts. The inrush current is limited by the pre-charge resistor.

The claimed invention dissipates pre-charge energy through Joule effect in the resistor. Moreover, energy-losses are neglectable for pre-charge due to the very short period for pre-charging.

According to the above, the claimed invention has the following advantages with respect to the classical pre-charge systems:
- The power semiconductor device which acts as a switch has higher lifespan because it does not have movable mechanical parts.
- The power semiconductor device has not bouncing, which is a classic effect of an electro-mechanical switch.
- The classic pre-charge circuit has a higher volume and cost compared to the claimed invention.

In addition, the claimed invention has the following advantages regarding the
Inductor based Pre-charge known in the state of the art:
- The claimed invention changes only a relay not the complete pre-charge system. In particular, it maintains the pre-charge resistor.
- In the claimed invention the power semiconductor device works as a switch which is open for starting the pre-charge and closed for finishing the pre-charge, without the need of Pulse Width Modulation (PWM) control signals as the inductor based Active Pre-charge needs a PWM control signal for controlling the switching frequency and duty.
- The robustness of the claimed invention is higher than the inductor-based solution due to the control temperature dependence and the switching working mode of the semiconductor/s, frequency and duty control.

Finally, the claimed invention has the following advantages regarding the Solid State Relay SSR making the dual function of Main contactor and Pre-charge switch, known in the state of the art:
- The claimed invention only replaces the pre-charge relay and not the positive Main contactor. There is no power semiconductor device that can withstand high voltage and high current and, at the same time, can switch at very high frequency, in addition to control the duty, to achieve a controlled pre-charge.
- When the power semiconductor device works to perform the pre-charge, is not possible to have a controlled limitation of the current. Even, if the duty and frequency of the Pulse Width modulation PWM signal are controlled, it is not possible to limit the inrush current peak and to have a constant current during the pre-charge.
- This solution cannot achieve high isolation levels, there is a leakage current that flows across the body diode of the Solid State Relay that does not allow it.

The invention is directed to a current junction box comprising a second portion of a current line comprising a switch and a pre-charge system according to the above, the second portion of the current line being connected to a second battery pole.

### Description of the figures

To complete the description and to provide for a better understanding of the invention, a set of drawings is provided. Said drawings form an integral part of the description and illustrate preferred embodiments of the invention. The drawings comprise the following figures.
Figure 1 shows a circuit of a classical pre-charge system known in the state of the art.
Figure 2 shows a circuit of a pre-charge system known in the state of the art based on an inductor.
Figure 3 shows a circuit of a pre-charge system known in the state of the art based on a Solid State Relay known in the state of the art.
Figure 4 shows a circuit of a pre-charge system according to an embodiment of the invention.
Figure 5 shows a power semiconductor device and a driver element included in a control device according to the embodiment of figure 4.

### Detailed description of the invention

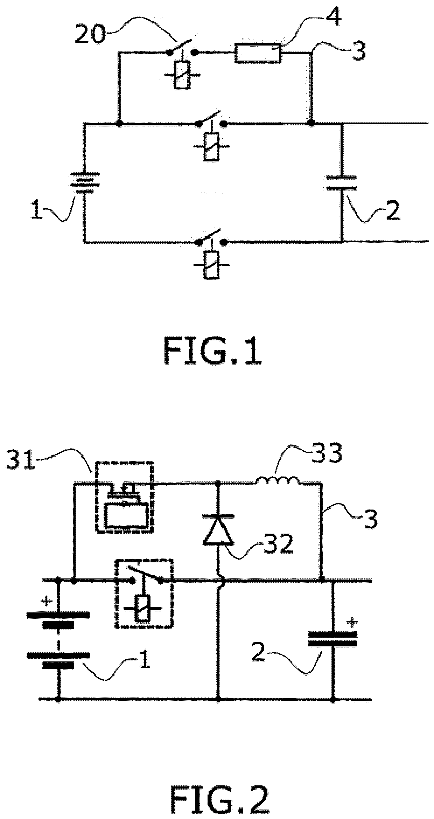

Figure 1 discloses a known pre-charge system comprising an electro-mechanical system to equalize the voltage levels between a battery (1) and the peripherals. A capacitor (2) at the peripheral side, generally named coupling capacitor or DC-Link is pre-charged by means of the pre-charge line (3) with current controlled by means of a resistor (4). The system further comprises a relay (20) in series with the resistor (4).

Figure 2 discloses another pre-charge system known in the state of the art that is based on an inductor (33). It comprises a power semiconductor device (31), for instance, a Solid State Relay, controlled by a control device, a diode (32) in parallel with a High Voltage Battery (1) and the inductor (33) in series with the battery (1).

The power semiconductor device (31) disclosed in figure 2 must have a higher performance than the semiconductor of the claimed invention. The control of the invention is easier than the control of the device disclosed in figure 2. The semiconductor disclosed in figure 2 has to be controlled at very high frequencies, so the characteristics of the semiconductor should be much more reliable and be able to support both the high operating frequency and the control of the duty cycle. The working frequency in PWM is between 10-300k Hz, and in the claimed invention is 2k Hz or less. In addition, this lower switching frequency implies a higher Gate-source capacity which helps to improve the isolation of the semiconductor.

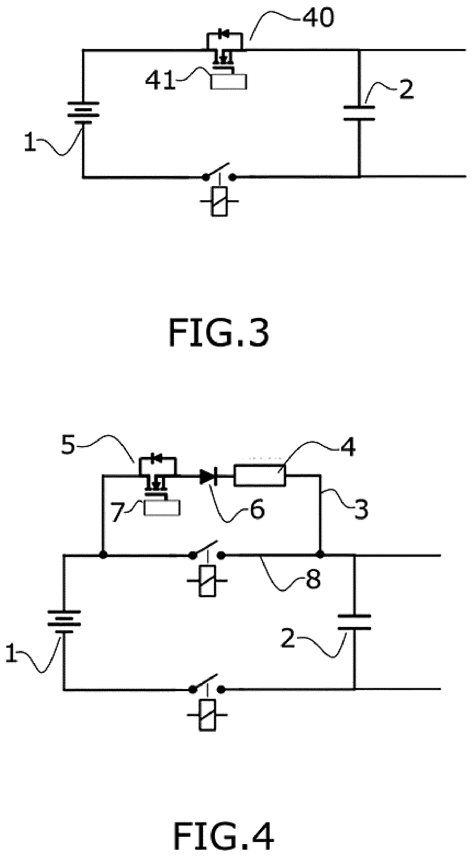

Figure 3 discloses another known pre-charge system of the state of the art. It is based on a Solid State Relay (SSR). In this case, the classical pre-charge known system and the main contactor are replaced by a single power semiconductor device (40) and a control device (41). In the pre-charge mode, the power semiconductor device (40) control signal shall be a Pulse Width modulation PWM signal. When the pre-charge ends, the power semiconductor device (40) shall also work as a main contactor. As the power semiconductor device (40) acts also as PWM the characteristics of the semiconductor device (40) shall be the same as the previously indicated in figure 2, contrary to the claimed invention where the control is easier and the specification less restrictive.

Figure 4 shows an embodiment of the invention. The disclosed system comprises:
- a portion of a current line (8) comprising a switch, and connected to a first battery pole,
- the pre-charge current line (3) parallel to the portion of the current line (8),
- the resistor (4) being electrically connected in series to the battery (1) and the capacitor (2) through the pre-charge current line (3),
- the power semiconductor device (5) connected in series with the resistor (4) through the pre-charge current line (3) and configured to act as a switch of a current flow from the battery (1) towards the capacitor (2),
- the control device (7) in electrical connection with the power semiconductor device (5) and configured to connect and disconnect the power semiconductor device (5), and
- the power diode (6) electrically connected in series with the power semiconductor device (5) through the pre-charge current line (3) and configured to block a current flowing from the capacitor (2) to the battery (1).

In this way, the inrush current is limited by the resistor (4). Usually, the inrush current shall be limited between 10A-20A and to a pre-charge time of less than one second.

In an embodiment, the elements of the pre-charge circuit have the next characteristics:
➢ Regarding the power semiconductor device (5) that can be a Mosfet or an IGBT:
   - Drain to Source voltage:
      - Vds > 500V for Batteries of 400V-450V
      - Vds > 850V for Batteries of 800V
      - Vds > 1050 for Batteries of 1000V
   - Drain current: Depends on the HV battery voltage and the pre-charge resistor. $\hat{{I}_{DS}} > \frac{{V}_{Bat}}{{R}_{Precharge}}$
   - Zero-gate voltage Drain current: It is the leakage current when the Mosfet is open. This parameter is used to know the isolation resistance between Drain and Source (which use to be a customer requirement). ${I}_{DSS} < \frac{{V}_{Bat}}{{R}_{Isolation \left(Requested\right)}}$
➢ Regarding the power diode (6):
   - Reverse voltage: same of the power semiconductor device (5).
   - Forward current: same of the power semiconductor device (5).
   - Reverse leakage current: same of the power semiconductor device (5). The power diode (6) is placed to block the current from capacitor (2), for instance a DC-Link, to the battery (1). Furthermore, it shall ensure the battery (1) isolation resistance in the next way: from DC-Link to battery (1).

In an embodiment, the control device (7) is configured to be connected to two different circuits with different voltage of reference, a first circuit, which is the circuit related to the battery, a first-referenced circuit, through the power semiconductor device (5), and to a second circuit, a second-referenced circuit, with a second referenced voltage different from the first referenced voltage related to a different power supply. The second circuit, preferably, being supplied by power supply with a lower voltage than the first, such as a low voltage battery, less than 60V, more preferably less than 20V.

In the shown embodiment, the control device (7) comprises a driver for feeding the power semiconductor device (5). The driver of the control device (7) is supplied from a low-voltage battery, a second circuit, but the power semiconductor device (5) is placed in a high-voltage side, a first circuit. According to an embodiment, the driver of the control device (7) comprises isolation between the first-voltage circuit at the semiconductor device (5) and the second-voltage circuit. Therefore, the driver of the control device (7) comprises an isolation between the first circuit, high-voltage side, and the second circuit, the low-voltage side.

In a shown embodiment, the power semiconductor device (5) may comprise the control device (7) integrated.

In the shown embodiment, the driver of the control device (7) is supplied from a second circuit of a low voltage battery, the second-referenced circuit, typically ranging from 3V to 5,5V. However, the first circuit, i.e., the power semiconductor device (5) needs a Gate to Source voltage higher than 10V to work properly. Therefore, the connection between the driver of the control device (7) and the power semiconductor device (5) is a gate source connection. Then, the driver of the control device (7) comprises a boost that is configured to feed the semiconductor device (5) to operate it with its input supply, for achieving the requested Gate to Source voltage required. The boost operation is made isolating the first-referenced circuit in relation to the second-referenced circuit.

Specifically, the control device (7) comprises a driver with a galvanic isolation or any other isolation system for isolating the first-referenced circuit to the second-referenced circuit. The galvanic isolation may be basic for batteries of 450V and reinforced for 800V or more batteries. Galvanic isolation implies physical separation between the different reference areas. The kind of isolation defines distances and isolation voltages to be applied.

More specifically, galvanic isolation is related to ohmic current (DC) insulation. There is a physical layer that prevents DC currents from passing through the device. There are different insulation considerations: basic wherein a single failure can compromise the insulation, double wherein two failures can compromise the insulation and reinforced wherein there is a single layer but with much more distance than basic, so it is considered equivalent to double.

In the shown embodiment, the power diode (6) is located between the resistor (4) and the power semiconductor device (5). Although it could be anywhere in the pre-charge current line (3), before or after the semiconductor device (5). In this way the power diode (6) protects the power semiconductor device (5) from high currents from the capacitor side. In addition, the resistor (4) previously dissipates some of the electrical current.

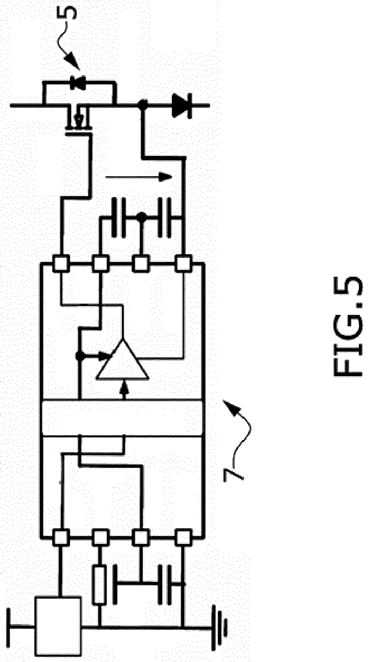

Furthermore, in the shown embodiment of figure 5, the driver of the control device (7) is in charge of feeding the semiconductor device (5). Figure 5 also shows that the Source terminal of the transistor of the power semiconductor device (5), for instance, a Mosfet is floating due to not be connected to the ground reference of the first circuit. Therefore, the driver of the control device (7) has to be a High Side Driver (HSD). For that reason, a low side control device cannot be used in this application. The high side control driver (HSD) is defined as a switch based on silicon that supplies a load with not referenced terminals.

All the system shall be designed to ensure the required Automotive Safety Integrity Level (ASIL) level for the pre-charge function. However, if the Pre-Charge function is a high safety level function (ASIL C or D) it shall be required a control device (7) with diagnostics capability. The diagnostics are used to determine fails in pre-charge components. The electronic control unit ECU which controls the pre-charge can be informed of failures to prevent hazard events, avoiding pre-charge tries when some components are damaged.

The diagnoses can be:
- Current Diagnose: To detect over currents or the absence of current during the pre-charge in any point of the pre-charge current line (3).
- External Temperature: Detect an external overtemperature (semiconductors). The system could comprise an environmental temperature sensor or a temperature signal entrance for this detection.
- Internal Temperature: The control device diagnosis itself as a part of the pre-charge circuit. In this case, it detects an internal overtemperature. The system could comprise a temperature sensor in the same power semiconductor device (5) or in the resistor (4) as being the system hotspots.
- Drive Voltage: The control device detects if the Gate to Source voltage of the transistor is correct (it supplies the transistor, for instance, a Mosfet by this voltage). The system could comprise a voltmeter to measure the Gate to Source voltage.
- Drain to Source voltage: The control device checks the voltage between the Mosfet terminals to ensure that is closed/open when it is required. The system could comprise a voltmeter to measure the Drain to Source voltage.
- In other hand this kind of control device can have a communication bus (SPI, I2C...) to send the information to the BMC (ECU that controls the pre-charge). That is, the BMC acts as Master and the Control device as a Slave in the communication (BMC request to Control device and it responds).

In other hand, the control device shall be selected to have the necessary diagnostics to achieve the required Safety level of the Pre-charge function. This diagnostics can include: the SSR is working properly, current/temperature monitoring.

In an embodiment, the control device (7) is configured to measure the voltage difference at the terminals of the resistor (4) or at the terminals of the power semiconductor device (5) to detect over currents or the absence of current.

In another embodiment, the control device (7) is configured to receive the temperature from a vehicle's monitoring system, or the pre-charge system comprises an ambient temperature sensor to detect an external overtemperature.

In another embodiment, the pre-charge system comprises a temperature sensor located in the resistor (4) or in the power semiconductor device (5) to detect an internal overtemperature.

In another embodiment, the control device (7) is configured to detect the voltage provided by a driver of the control device (7) to the semiconductor device (5).

## Claims

1. Current junction box for electric or hybrid vehicles **characterized in that** it comprises:
• a second portion of a current line (9) comprising a switch, and
• a pre-charge system comprising:
• a portion of a current line (8) comprising a switch, and connected to a first battery pole,
• a pre-charge current line (3) parallel to the portion of the current line (8),
• a resistor (4) being electrically located in the pre-charge current line (3),
• a power semiconductor device (5) electrically connected in series with the resistor (4) through the pre-charge line (3) and configured to act as a switch of a current flowing through the pre-charge current line (3),
• a control device (7) in electrical connection with the power semiconductor device (5) and configured to connect and disconnect the power semiconductor device (5), and
• a power diode (6) electrically connected in series with the power semiconductor device (5) through the pre-charge line (3) and configured to block a counter current flowing through the pre-charge current line (3),
the second portion of the current line (9) being connected to a second battery pole, and the pre-charge system being configured such that when the power semiconductor device (5) is switched to closed, the pre-charge system starts.

2. Junction box, according to claim 1, wherein the control device (7) comprises a driver which is configured to be connected to a first circuit with a first-referenced voltage through the power semiconductor device (5) and to a second circuit with a second-referenced voltage different from the first-referenced voltage, the second-referenced voltage being lower than the first-referenced voltage, the driver comprising isolation between the first voltage of the first circuit and the second voltage of the second circuit.

3. Junction box, according to claim 2, wherein the driver of the control device (7) comprises a galvanic isolation.

4. Junction box, according to any preceding claim 2 to 3, wherein the driver of the control device (7) is a high side control device driver HSD.

5. Junction box, according to claim 4, wherein the connection between the driver of the control device (7) and the power semiconductor device (5) is a gate source connection.

6. Junction box, according to claim 2 or 5, wherein the driver of the control device (7) comprises a boost that is configured to feed the semiconductor device (5) to operate it.

7. Junction box, according to any preceding claim, wherein the semiconductor device (5) is a Mosfet.

8. Junction box, according to any preceding claim, wherein the control device (7) has a diagnosis capability.

9. Junction box, according to claim 8, wherein the control device (7) is configured to measure the voltage difference at the terminals of the resistor (4) or at the terminals of the power semiconductor device (5) to detect over currents or the absence of current.

10. Junction box, according to claim 8 or 9, wherein the control device (7) is configured to receive the temperature from a vehicle's monitoring system or the pre-charge system comprises an ambient temperature sensor to detect an external overtemperature.

11. Junction box, according to any preceding claim 8 to 10, wherein it comprises a temperature sensor located in the resistor (4) or in the power semiconductor device (5) to detect an internal overtemperature.

12. Junction box, according to any preceding claim 8 to 11, wherein the control device (7) is configured to detect the voltage provided by a driver of the control device (7) to the semiconductor device (5).

13. Junction box, according to any preceding claim, wherein the power semiconductor device (5) comprises the control device (7) integrated.

14. Junction box, according to any preceding claim, wherein the power diode (6) is located between a resistor (4) and the power semiconductor device (5).

## Patentansprüche

1. Stromanschlussdose für Elektro- oder Hybridfahrzeuge, **dadurch gekennzeichnet, dass** sie Folgendes umfasst:
• einen zweiten Abschnitt einer Stromleitung (9), die einen Schalter umfasst, und
• ein Vorladesystem, umfassend:
• einen Abschnitt einer Stromleitung (8), die einen Schalter umfasst und mit einem ersten Batteriepol verbunden ist,
• eine Vorladeleitung (3) parallel zu dem Abschnitt der Stromleitung (8),
• einen Widerstand (4), der elektrisch in der Vorladeleitung (3) angeordnet ist,
• eine Leistungshalbleitervorrichtung (5), die über die Vorladeleitung (3) elektrisch in Reihe mit dem Widerstand (4) geschaltet und so konfiguriert ist, dass sie als Schalter eines durch die Vorladeleitung (3) fließenden Stroms fungiert,
• eine Steuervorrichtung (7) in elektrischer Verbindung mit der Leistungshalbleitervorrichtung (5), die zum Anschließen und Trennen der Leistungshalbleitervorrichtung (5) konfiguriert ist, und
• eine Leistungsdiode (6), die elektrisch in Reihe mit der Leistungshalbleitervorrichtung (5) durch die Vorladeleitung (3) geschaltet und so konfiguriert ist, dass sie einen Gegenstrom blockiert, der durch die Vorladeleitung (3) fließt,
wobei der zweite Abschnitt der Stromleitung (9) mit einem zweiten Batteriepol verbunden ist und das Vorladesystem so konfiguriert ist, dass das Vorladesystem startet, wenn die Leistungshalbleitervorrichtung (5) auf geschlossen geschaltet wird.

2. Anschlussdose nach Anspruch 1, wobei die Steuervorrichtung (7) einen Treiber umfasst, der so konfiguriert ist, dass er mit einer ersten Schaltung mit einer ersten Referenzspannung über die Leistungshalbleitervorrichtung (5) und mit einer zweiten Schaltung mit einer zweiten Referenzspannung, die sich von der ersten Referenzspannung unterscheidet, verbunden wird, wobei die zweite Referenzspannung niedriger als die erste Referenzspannung ist, wobei der Treiber eine Isolierung zwischen der ersten Spannung der ersten Schaltung und der zweiten Spannung der zweiten Schaltung umfasst.

3. Anschlussdose nach Anspruch 2, wobei der Treiber der Steuervorrichtung (7) eine galvanische Trennung aufweist.

4. Anschlussdose nach einem der vorhergehenden Ansprüche 2 bis 3, wobei der Treiber der Steuervorrichtung (7) ein High-Side-Schalter HSD ist.

5. Anschlussdose nach Anspruch 4, wobei die Verbindung zwischen dem Treiber der Steuervorrichtung (7) und der Leistungshalbleitervorrichtung (5) eine Gate-Source-Verbindung ist.

6. Anschlussdose nach Anspruch 2 oder 5, wobei der Treiber der Steuervorrichtung (7) einen Boost umfasst, der so konfiguriert ist, dass er die Halbleitervorrichtung (5) speist, um sie zu betreiben.

7. Anschlussdose nach einem der vorstehenden Ansprüche, wobei die Halbleitervorrichtung (5) ein MOSFET ist.

8. Anschlussdose nach einem der vorstehenden Ansprüche, wobei die Steuervorrichtung (7) eine Diagnosefähigkeit aufweist.

9. Anschlussdose nach Anspruch 8, wobei die Steuervorrichtung (7) so konfiguriert ist, dass sie die Spannungsdifferenz an den Anschlüssen des Widerstands (4) oder an den Anschlüssen der Leistungshalbleitervorrichtung (5) misst, um Überströme oder fehlenden Strom zu erkennen.

10. Anschlussdose nach Anspruch 8 oder 9, wobei die Steuervorrichtung (7) so konfiguriert ist, dass sie die Temperatur von einem Fahrzeugüberwachungssystem empfängt, oder das Vorladesystem einen Umgebungstemperatursensor umfasst, um eine externe Übertemperatur zu erfassen.

11. Anschlussdose nach einem der vorstehenden Ansprüche 8 bis 10, wobei sie einen Temperatursensor umfasst, der sich im Widerstand (4) oder in der Leistungshalbleitervorrichtung (5) befindet, um eine interne Übertemperatur zu erfassen.

12. Anschlussdose nach einem der vorstehenden Ansprüche 8 bis 11, wobei die Steuervorrichtung (7) so konfiguriert ist, dass sie die Spannung erfasst, die von einem Treiber der Steuervorrichtung (7) an die Halbleitervorrichtung (5) bereitgestellt wird.

13. Anschlussdose nach einem der vorstehenden Ansprüche, wobei die Leistungshalbleitervorrichtung (5) die integrierte Steuervorrichtung (7) umfasst.

14. Anschlussdose nach einem der vorstehenden Ansprüche, wobei die Leistungsdiode (6) zwischen einem Widerstand (4) und der Leistungshalbleitervorrichtung (5) angeordnet ist.

## Revendications

1. Boîte de jonction de courant pour véhicules électriques ou hybrides **caractérisée en ce qu'**elle comprend :
• une deuxième partie d'une ligne de courant (9) comprenant un commutateur, et
• un système de précharge comprenant :
• une partie d'une ligne de courant (8) comprenant un commutateur et connectée à un premier pôle de batterie,
• une ligne de courant de précharge (3) parallèle à la partie de la ligne de courant (8),
• une résistance (4) électriquement située dans la ligne de courant de précharge (3),
• un dispositif semi-conducteur de puissance (5) connecté électriquement en série avec la résistance (4) par la ligne de précharge (3) et configuré pour agir en tant que commutateur d'un courant circulant dans la ligne de courant de précharge (3),
• un dispositif de commande (7) en connexion électrique avec le dispositif semi-conducteur de puissance (5) et configuré pour connecter et déconnecter le dispositif semi-conducteur de puissance (5), et
• une diode de puissance (6) électriquement connectée en série avec le dispositif semi-conducteur de puissance (5) par la ligne de précharge (3) et configurée pour bloquer un contre-courant circulant à travers la ligne de courant de précharge (3),
la deuxième partie de la ligne de courant (9) étant connectée à un deuxième pôle de batterie, et le système de précharge étant configuré de telle sorte que, lorsque le dispositif semi-conducteur de puissance (5) est commuté sur fermé, le système de précharge démarre.

2. Boîte de jonction selon la revendication 1, dans laquelle le dispositif de commande (7) comprend un pilote qui est configuré pour être connecté à un premier circuit ayant une première tension référencée par le dispositif semi-conducteur de puissance (5) et à un deuxième circuit ayant une deuxième tension référencée différente de la première tension référencée, la deuxième tension référencée étant inférieure à la première tension référencée, le pilote comprenant une isolation entre la première tension du premier circuit et la deuxième tension du deuxième circuit.

3. Boîte de jonction selon la revendication 2, dans laquelle le pilote du dispositif de commande (7) comprend une isolation galvanique.

4. Boîte de jonction selon l'une quelconque des revendications précédentes 2 à 3, dans laquelle le pilote du dispositif de commande (7) est un pilote de dispositif de commande côté haut HSD.

5. Boîte de jonction selon la revendication 4, dans laquelle la connexion entre le pilote du dispositif de commande (7) et le dispositif semi-conducteur de puissance (5) est une connexion de source de grille.

6. Boîte de jonction selon la revendication 2 ou 5, dans laquelle le pilote du dispositif de commande (7) comprend un amplificateur qui est configuré pour alimenter le dispositif semi-conducteur (5) et le faire ainsi fonctionner.

7. Boîte de jonction selon l'une quelconque des revendications précédentes, dans laquelle le dispositif semi-conducteur (5) est un MOSFET.

8. Boîte de jonction selon l'une quelconque des revendications précédentes, dans laquelle le dispositif de commande (7) a une capacité de diagnostic.

9. Boîte de jonction selon la revendication 8, dans laquelle le dispositif de commande (7) est configuré pour mesurer la différence de tension aux bornes de la résistance (4) ou aux bornes du dispositif semi-conducteur de puissance (5) pour détecter les surintensités ou l'absence de courant.

10. Boîte de jonction selon la revendication 8 ou 9, dans laquelle le dispositif de commande (7) est configuré pour recevoir la température du système de surveillance d'un véhicule ou le système de précharge comprend un capteur de température ambiante pour détecter une surchauffe externe.

11. Boîte de jonction selon l'une quelconque des revendications précédentes 8 à 10, dans laquelle la boîte de jonction comprend un capteur de température situé dans la résistance (4) ou dans le dispositif semi-conducteur de puissance (5) pour détecter une surchauffe interne.

12. Boîte de jonction selon l'une quelconque des revendications précédentes 8 à 11, dans laquelle le dispositif de commande (7) est configuré pour détecter la tension fournie par un pilote du dispositif de commande (7) au dispositif semi-conducteur (5).

13. Boîte de jonction selon l'une quelconque des revendications précédentes, dans laquelle le dispositif semi-conducteur de puissance (5) comprend le dispositif de commande (7) intégré.

14. Boîte de jonction selon l'une quelconque des revendications précédentes, dans laquelle la diode de puissance (6) est située entre une résistance (4) et le dispositif semi-conducteur de puissance (5).
